# EUROPEAN PATENT APPLICATION

(11) **EP 4 184 039 A1**
(43) Date of publication of application: **24.05.2023**
(21) Application number: 21210030.9
(22) Date of filing: 23.11.2021
(51) Int. Cl.: F16H 59/02, B60K 20/06, B62D 1/04

(54) **STEERING WHEEL INPUT DEVICE**

(71) Applicant: Aptiv Technologies Limited, St. Michael (BB)
(72) Inventor: SULKOWSKI, Tomasz, Dublin, 2 (IE)
(74) Representative: Gaunt, Thomas Derrick

(57) **Abstract**

A steering wheel input device (1) includes an input actuator (3) for location adjacent to a steering wheel (2) and includes a one or two input regions (31), each being moveable around an axis of the steering wheel (2) and being pressable by one of the driver's hands (7) on the steering wheel (1) for registering inputs. A tracking input (5) receives tracking data, and a controller (9) moves the input regions (31) based on this. The tracking data may include hand tracking data for determining the location of the driver's hands (7,8) on the steering wheel (2), where the controller (9) is operable to move the input regions (31) in line with movement of the driver's hands (7) around the steering wheel (2) .

## Description

### Introduction

The present disclosure relates to a steering wheel input device and, in particular, a gear shift device for a steering assembly. The present disclosure is particularly relevant to automotive paddle shifters and automotive input devices for a steering wheel group.

### Background

Paddle shifters have become more common in vehicles to effect gear changes. Typically, an upshift paddle and a downshift paddle will be provided, on opposite sides, behind the steering wheel. By clicking the paddle shifters, a driver is able to upshift or downshift the transmission while maintaining contact with the steering wheel. As such, the driver is provided with a more engaging driving experience, whilst at the same time changing gears is safer and quicker because the driver's hand isn't being moved down to a gear lever.

A problem with paddle shifters, however, arises when the steering wheel is turned. In arrangements where the upshift and downshift paddles are mounted to the steering wheel itself, the paddles will rotate with the wheel. As such, there is a risk that a driver could use the wrong gear shifter as the wheel moves further around. Conversely, in arrangements where the upshift and downshift paddles are mounted to the steering column in a fixed position either side of the steering wheel, the paddles aren't always underneath the driver's hands and hence may not be as accessible when the steering wheel is at some turn angles.

Both wheel and column mounted arrangements have different pros and cons, and the determination of which arrangement is 'better' often comes down to driver preference and the driving environment. In general, drivers who like to grip the wheel tightly and never change hand positions prefer wheel-mounted gear shift paddles in a more F1 style. On the other hand, drivers who prefer more spirited driving styles, such as rally or drifting, will generally prefer static paddles. Equally, driver preference sometimes depends on where the vehicle is being driven, with city driving involving tight turns and tight parking spots normally being more suited to static paddles. This presents a problem for vehicle manufacturers because the decision on where to mount the paddle shifters is dictated by vehicle design. As such, whichever mounting option they choose for a particular vehicle, will likely disappoint some drivers.

There therefore remains a need for an improved steering wheel input device, particularly for effecting gear changes.

### Summary

According to a first aspect, there is provided a steering wheel input device including: an input actuator for location adjacent to a steering wheel and including a first input region being moveable around an axis of the steering wheel and operable by a driver's first hand on the steering wheel for registering a first input; a tracking input for receiving tracking data of the interior of the vehicle; and a controller for moving the first input region based on the tracking data.

In this way, a steering wheel input device, such as a gear shift device for effecting gear changes, may be provided in which the position of one or more inputs may be moved under the control of a controller. As such, the device allows for flexibility depending on a driver's preferences or current driving conditions. For instance, in a column mode, the controller may hold the one or more inputs statically in fixed positions for mimicking column mounted paddles. Alternatively, in other modes, the controller may move the one or more inputs dynamically based on tracking information according to the prevailing circumstances.

In embodiments, the tracking data includes steering wheel rotation data for determining the rotational position on the steering wheel, and wherein the controller is operable to move the first input region in line with the rotation of the steering wheel. In this way, the controller may be set to a wheel mode so that the actuator mimics the function of a steering wheel mounted paddle shifter. Consequently, the one or more input regions may follow the movement of the steering wheel so that they remain rotationally aligned with the wheel as it is turned. As such, where the driver maintains their hand position on the wheel, the one or more input regions may always be located beneath their hands ready for use, irrespective of the current wheel turning angle.

In embodiments, the tracking data includes hand tracking data for determining the location of the driver's first hand on the steering wheel, and wherein the controller is operable to move the first input region in line with movement of the first hand around the steering wheel. In this way, a hybrid mode may be provided whereby one or more input regions track movement of the driver's hands. As such, wherever the driver grips the steering wheel, an input region may be provided within pressable reach. Consequently, even if the driver moves their hand positions as they turn the steering wheel, the gear change input remains immediately accessible.

In embodiments, the input actuator further includes a second input region being moveable around the axis of the steering wheel and pressable by a driver's second hand on the steering wheel for registering a second input. In this way, two input different regions may be provided for, for instance, actuating both upshift and downshift operations. In embodiments, the controller is configured to not to register one of the first and second inputs when the first and second inputs are moved to overlap.

In embodiments, the controller is operable to move the second input region in line with one of: (a) the rotation of the steering wheel based on steering wheel rotation tracking data, or (b) movement of the second hand around the steering wheel based on hand tracking data, wherein the hand tracking data is further for determining the location of the second hand on the steering wheel. In this way, the second input region may mirror the functionality of the first input region for the driver's second hand.

In embodiments, the device is a gear shift device, and the first input region is a gear shift input for actuating a gear change.

In embodiments, the input actuator includes a ring member for location coaxial to the steering wheel and wherein the first input region is moveable circumferentially around the ring member. In this way, the ring member may be mounted behind and in line with the steering wheel so that it can be reached by the driver's hand irrespective of where their hands are on the wheel. As such, a single member may be used to register inputs around the circumference of the steering wheel perimeter.

In embodiments, the steering wheel input device further includes: a mount for mounting the ring member behind the steering wheel, the mount forming a tiltable coupling with the ring member; and a tilt detector for detecting a radial direction of tilt of the ring member; and wherein the controller is configured to register a first input when a detected radial direction of tilt is in line with the first input region. In this way, a driver may register an input by pressing the ring member to pull it toward them, with the pivot direction designating a valid input if it coincides with the current input region. As such, even where the position of the input region is moving dynamically, inputs can be differentiated from accidental pressing of the ring based on the tilt direction. Furthermore, a single ring member may be used to register different inputs by tilting the ring in different directions depending on the direction of the respective input region. As such, the functionality of both upshift and downshift paddles may be mimicked using a single tiltable member, without needing to rotate the member as the steering wheel is rotated. In embodiments, it will be understood that the tiltable coupling may include a bias mechanism for biasing the ring member back to an un-tilted position after being pressed by a driver.

In embodiments, the steering wheel input device further includes an indicator provided on the ring member for indicating the current circumferential position of the first input region on the ring member. In this way, as the position of the one or more input regions move in use, the driver is provided with an indication of where the input regions currently are. In embodiments, the indicator may provide a visual indicator, such as a colored lighting region. In embodiments, different colored lighting regions may be used to indicate different indicator regions.

In embodiments, the input actuator includes a first paddle defining the first input region at its end, and wherein the device further includes a first mount for moveably supporting the first paddle, and a rotor for rotating the first mount to move the first paddle around the steering wheel axis. In this way, a paddle is provided which replicates the functionality of a conventional paddle shifter device, but which can also be moved to different positions depending on preferences and conditions.

In embodiments, the first paddle is tiltably coupled to the mount and wherein the device further includes a tilt detector for detecting a tilt of the first paddle, and wherein the controller is configured to register a first input when the first paddle is tilted. In this way, the driver may press the paddle toward the steering wheel to register an input. As the paddle is a single body associated with a specific input region, the driver is also able to accurately register a particular input.

In embodiments, the input actuator further includes a second paddle defining the second input region at its end, and wherein the device further includes a second mount for moveably supporting the second paddle, and a second rotor for rotating the second mount for moving the second paddle around the steering wheel axis. In this way, two independently movable paddles may be provided for registering two different inputs, such as upshift and downshift inputs.

In embodiments, the tracking input is configured to receive hand tracking data from a video feed of the interior of a vehicle for determining the location of the driver's hands on the steering wheel. In this way, the location of the one or more input regions may be controlled based on image recognition of a driver's hands from an interior video feed.

In embodiments, the tracking input includes a camera for receiving images of the interior of the vehicle. As such, the camera used for image tracking may form part of the device system.

In embodiments, the camera is mountable within a hub of the steering wheel. In this way, the camera may be mounted in the steering wheel to provide accurate tracking of the driver's hands position. In other embodiments, the camera may be mounted elsewhere in the cabin, such as in the rearview mirror module.

According to a second aspect, there is provided a steering wheel group including a steering wheel column; a steering wheel mounted to the steering wheel column; and an input device according to any of the above statements.

### Brief Description of Drawings

Illustrative embodiments will now be described with reference to the accompanying drawings in which:
Figure 1 shows a steering wheel input device according to a first embodiment;
Figure 2 shows a side view of the steering wheel input device of the first embodiment;
Figure 3 shows a schematic illustration of the field of view of the camera forming part of the device of the first embodiment;
Figure 4 shows a schematic front view of the steering wheel input device of the first embodiment when operating in hybrid mode with both driver's hands on the wheel;
Figure 5 shows a schematic front view of the steering wheel input device of the first embodiment when operating in hybrid mode with only one of the driver's hands on the wheel;
Figure 6 shows a schematic front view of the steering wheel input device of the first embodiment when operating in hybrid mode when both driver's hands are close together on the wheel;
Figure 7 shows a schematic front view of the steering wheel input device of the first embodiment when operating in wheel mode;
Figure 8 shows a schematic front view of the steering wheel input device of the first embodiment when operating in column mode;
Figure 9 shows a steering wheel input device according to a second embodiment;
Figure 10 shows a side view of the steering wheel input device of the second embodiment;
Figure 11 shows a schematic front view of the steering wheel input device of the second embodiment when operating in hybrid mode with both driver's hands on the wheel;
Figure 12 shows a schematic front view of the steering wheel input device of the second embodiment when operating in hybrid mode with only one of the driver's hands on the wheel;
Figure 13 shows a schematic front view of the steering wheel input device of the second embodiment when operating in hybrid mode when both driver's hands are close together on the wheel;
Figure 14 shows a schematic front view of the steering wheel input device of the second embodiment when operating in wheel mode; and
Figure 15 shows a schematic front view of the steering wheel input device of the second embodiment when operating in column mode

### Detailed Description

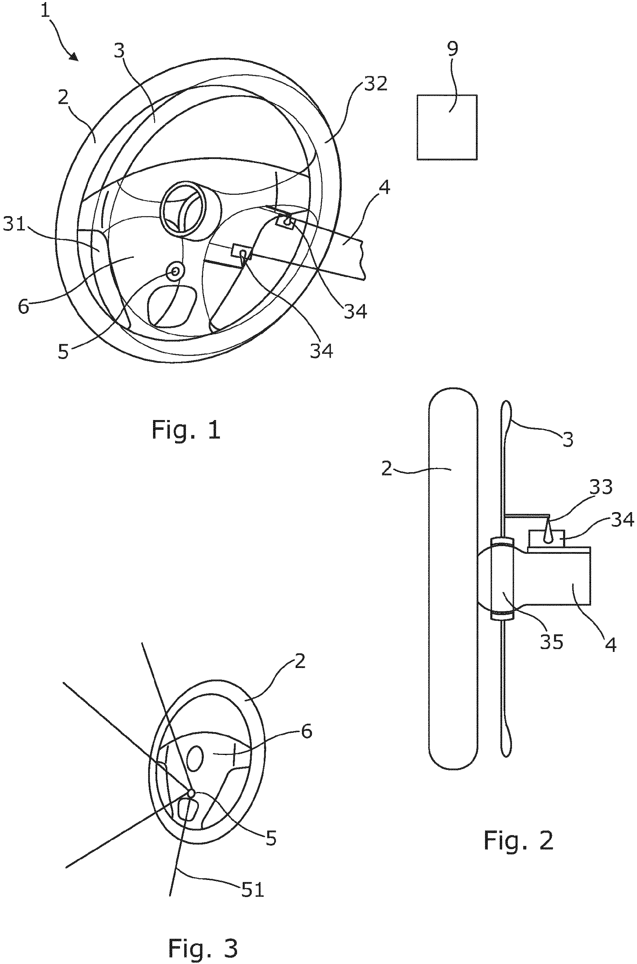

A steering wheel input device 1 according to a first embodiment is shown in Figures 1 and 2. The device 1 functions as a gear shift device and is incorporated into an automotive steering group which includes a steering column 4 and a steering wheel 2 which rotates round a longitudinal axis defined by the steering column 4.

The device 1 includes a ring member 3 which is mounted by arms to the steering column 4, behind the steering wheel. As shown in Figure 2, the mount 35 is provided as a nonrotating uniball joint which forms a tiltable coupling between the steering column 4 and the ring member 3. As such, the ring member 4 may be pulled by a driver's hand toward the steering wheel 2 in one direction at a time. A spring member (not shown) within the mount 35 biases the ring member 3 back to its non-tilted position, perpendicular to the steering column 4. As such, once a user releases the ring member 3 after pressing it toward the steering wheel 2, it springs back into its non-tilted position.

As shown in Figure 1, a set of two potentiometers 34 are further provided at a 90-degree offset around steering column. As shown in Figure 2, each potentiometer 34 is connected to the ring member 3 by a linkage 33. A controller 9 receives the measured readings from the potentiometers 34 and uses these in combination to determine the tilt direction of the ring member 3 in use. As such, the ring member 3 can function as an input actuator for registering inputs by a driver for effecting upshift and downshift actions, as is described in further detail below.

The ring member 3 further includes an LED array forming an indicator for identifying regions or zones of the ring 3 for actuation by the driver's hands. The LED array is lit under the control of the controller 8 to identify two input regions 31,32 around the ring circumference that are respectively associated with the upshift and downshift inputs. In this embodiment, the controller drives the LEDs within each input region to illuminate a different colour. As such, the two regions can be easily identified as different coloured zones on the ring 3. It will be understood that in other embodiments, other indicators may be used.

In this embodiment, the device 1 is further provided with a camera 6 mounted into the central hub 6 of the steering wheel 2. Figure 3 shows a schematic illustration of the field of view of the camera 5. As show, the camera 5 has a wide field of view for allowing accurate detection of the angular position of driver hands on, or in vicinity of, the steering wheel 2, as well allowing differentiation between the driver's left and right hands. The camera generates a video feed of the interior of the vehicle facing the driver as they hold the steering wheel. The controller 9 receives the video feed and, using image processing, tracks the position of the driver's hands on the wheel and the rotational position of the wheel as it is rotated. It will however be understood that in other embodiments, other sensors may be used for generating tracking data. For example, an interior camera mounted elsewhere, such as in the dashboard or in the rearview mirror unit, may be used to provide a video feed. Equally, in other embodiments, an angular sensor may be used to track the rotational position of the steering wheel 2.

In use, a driver may register an input by pulling the ring member 3 toward the steering wheel 4 in a direction corresponding to one of the two input regions 31,32. The controller 9 determines the direction of the movement based on the combined potentiometer readings 34. As such, the driver may effect a downshift operation by pressing the ring in a direction corresponding to the first input region 31, and conversely may effect a upshift operation by pressing the ring in a direction corresponding to the second input region 32. At the same time, the controller 9 is operable in different modes for varying the position of the first and second input regions 31,32 based on a driver's preferences, as described below.

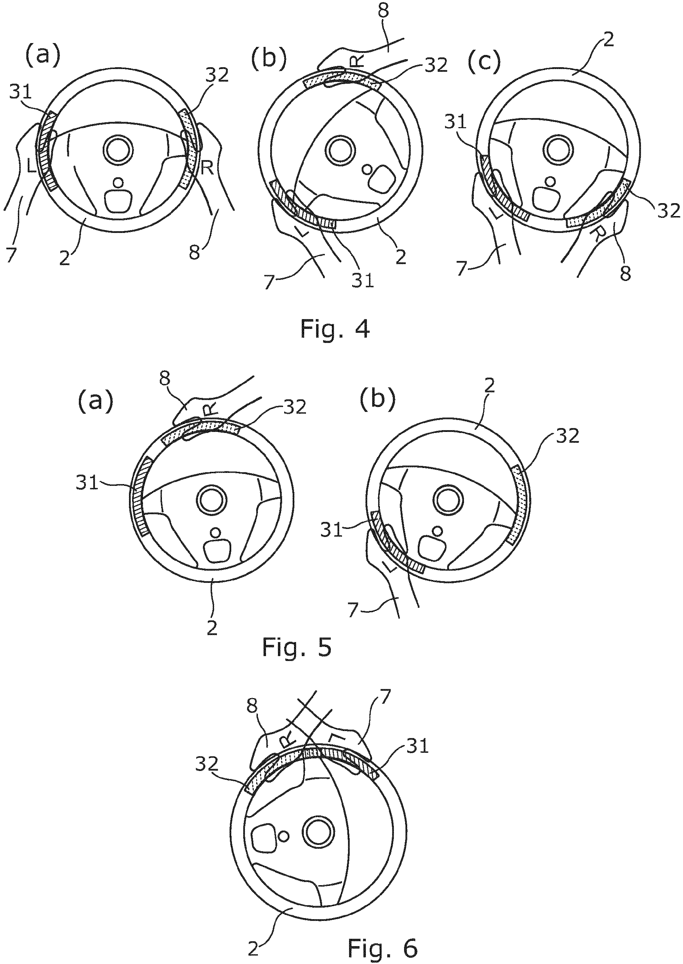

In this connection, a hybrid operating mode will be described with reference to Figure 4-5. In the hybrid mode, the input regions 31,32 are moved dynamically to always be positioned behind the driver's hands. This is achieved by using the tracking data from camera 5 to track the position of the driver's hands 7,8 and associating each hand with one of the two input regions 31,32. In this embodiment, the upshift region 32 is associated with the driver's right hand 8 and the downshift region 31 is associated with the driver's left hand 7 (or vice-versa, depending on user preference). As shown in Figure 4(a), when the driver is holding the wheel 2 straight, the upshift and downshift regions 31,32 are provided opposite one another around the circumference of the ring member 3. As shown in Figures 4(b) and (c), as the driver's hands move over the steering wheel 2, the relative positions of the upshift and downshift regions 31,32 may move closer together. It will be understood that the absolute positions of the regions 31,32 on the ring member 3 itself also move dynamically with rotation the wheel 2.

If the driver moves one of their hands away from the wheel, the controller 9 is configured by default to display the input region associated with the respective hand at its furthest most lateral position. For example, where a user's left hand 7 is removed, the downshift region 31 may be automatically positioned to the furthest most left-handside position (see Figure 5(a)). Conversely, where a user's right hand 8 is removed, the upshift region 32 may be automatically positioned to the furthest most right-handside position (see Figure 5(b)).

Figure 6 shows a scenario where both driver's hands are moved sufficiently close together on the steering wheel that the input regions 31,32 overlap. In this situation, the controller 9 is configured by default to ignore registering inputs in the downshift region 31. That is, the downshift region 31 is effectively covered by upshift area so that downshift operations are prevented, thereby avoiding the risk of over-revving the engine, or inadvertently putting the vehicle into neutral or reverse gear.

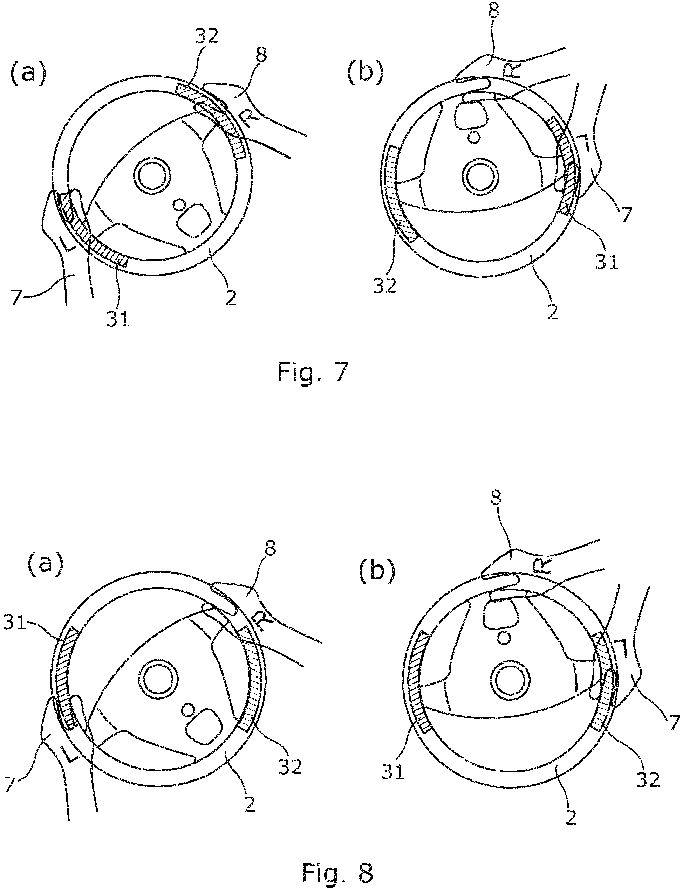

An alternative, wheel operating mode is described with reference to Figure 7. In this mode, the controller 9 uses the tracking data of the steering wheel rotation such that the input regions 31,32 follow the wheel angle. As such, the device may mimic the functionality of wheel-mounted gearshift paddles.

A further alternative, column operating mode is described with reference to Figure 8. In this mode, the controller 9 maintains the input regions 31,32 in static positions, with each in an opposing furthest most lateral position. As such, the downshift region 31 is maintained in the furthest most left-handside position and the upshift region 32 is maintained in the furthest most right-handside position, irrespective of the current rotational position of the steering wheel 2. As such, the device 1 may mimic the functionality of column-mounted gearshift paddles.

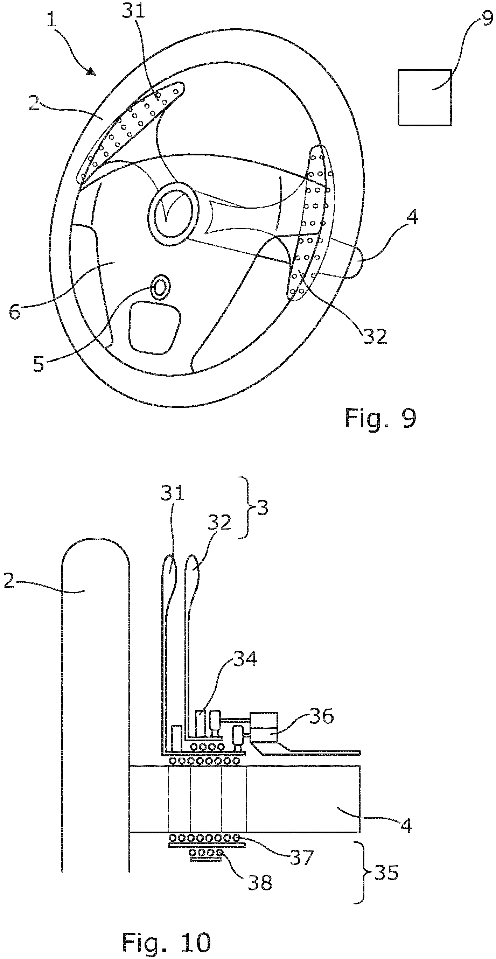

A steering wheel input device 1 according to a second embodiment is shown in Figures 9 and 10. This second embodiment is similar to the first embodiment, but rather than implement the input actuator using a ring member with an indicator designating the two input regions 31,32, the actuator 3 includes two moveable paddles which function as the two input regions 31,32.

In this connection, as shown in Figure 10, the paddles 31,32 are mounted to the steering column 4 by radially extending arms. As such, the distal ends of the paddles 31,32 sit behind the steering wheel 2. The mount 35 in this embodiment provided as two rotors 37,38. The bearing for each of the rotors 37,38 includes a geared section which is engaged by a stepper motor 36 which can be driven under the control of the controller to rotate each paddle 31,32 individually to any desired angle around steering column 4. At the same time, a pivotable coupling is provided between each rotor 37,38 and its respective paddle 31,32 for allowing the paddle to be pulled toward the steering wheel 2 by a driver's hand. A spring member (not shown) within each rotor again biases the paddle back to its non-tilted position, perpendicular to the steering column 4. Each rotor 37,38 is further provided with a tilt detection switch 34 which activates when the respective paddle 31,32 is pulled toward the steering wheel 2. The controller 9 receives the activation signal generated by the detection switches 34 for registering an input associated with the respective paddle 31,32. Unlike the first embodiment, an indicator for identifying the input regions is not provided in the second embodiment. However, because the paddles 31,21 are physical bodies, they can nevertheless be easily located by the driver.

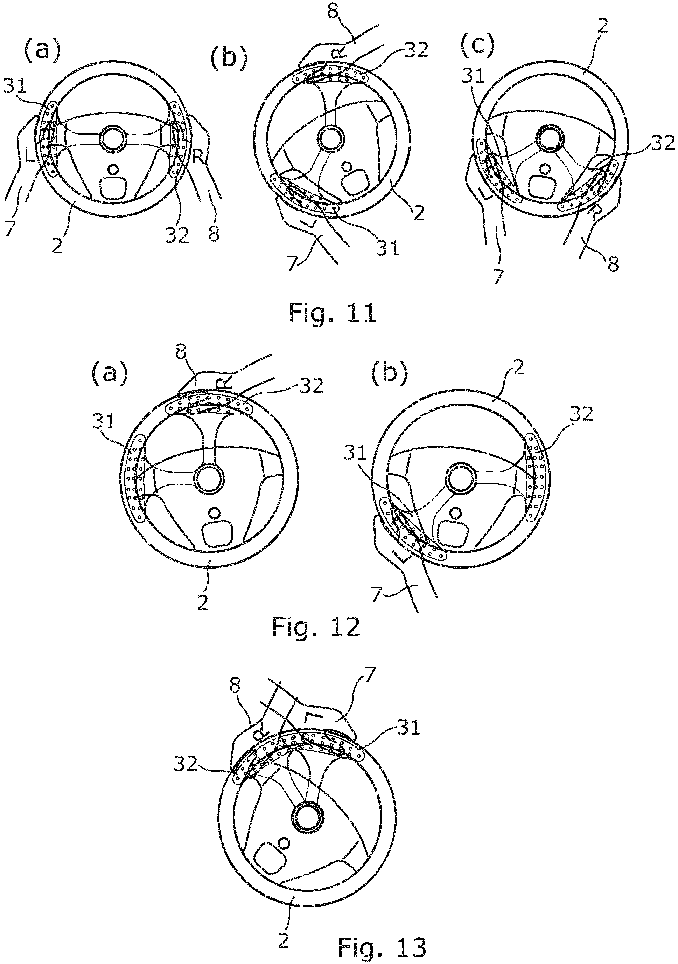

As shown in Figures 11 to 15, the second embodiment may implement the same hybrid, wheel, and column operating modes described above in relation to the first embodiment, except that the paddles 31,32 function as the input regions, and with the paddles themselves being physically moved to the required positions under the mode.

In this connection, in the hybrid mode shown in Figures 11 to 13 for example, the rotors 37,38 are rotated under the control of the controller 9 based on hand tracking data from camera 5 such that the positions of the first and second paddles 31,32 follow the driver's left and right hands 7,8. As with the scenario shown in Figure 6 above, in the scenario shown in Figure 13 where both driver's hands are moved sufficiently close together that the paddles 31,32 overlap, inputs to the downshift paddle 31 are ignored. In this embodiment, this is achieved in part because the rotors 37,38 are arranged so that the downshift paddle 31 is covered by the upshift paddle 32 when they are at the same angle. In addition, the controller 9 is also configured to ignore registering inputs via the switch 34 on the downshift panel 31 when the paddles overlap. This again avoids the risk of over-revving the engine, or inadvertently putting the vehicle into neutral or reverse gear.

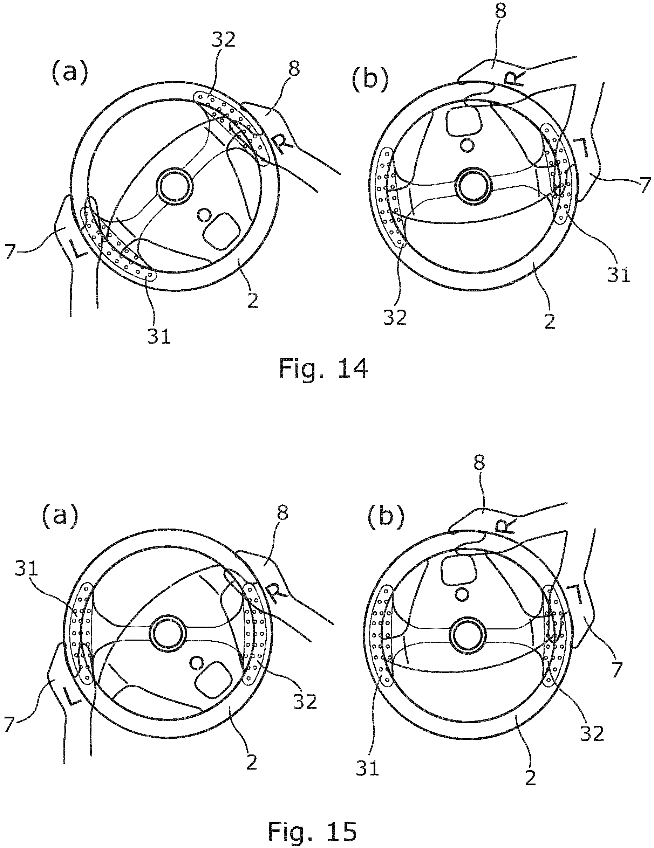

With the second embodiment, the wheel operating mode shown in Figure 14 operates in the same way as the first, with the controller 9 using the tracking data of the steering wheel rotation such that the paddles 31,32 follow the movements of the steering wheel. Equally, in the column operating mode shown in Figure 15, the controller 9 again simply sets the paddles 31,32 in static further most lateral positions, irrespective of steering wheel 2 rotation.

With the above embodiments, a steering wheel input device is thereby provided which can be set to implement different operating modes based on driver preference. The device can operate in the same way as both steering wheel mounted and steering column mounted shifter paddles, as well as provide a new hybrid mode where the driver's hands are always within reach of the gear shift inputs, irrespective of where the driver is currently gripping the steering wheel. As such, gear changes may be effected more quickly and safely.

It will be understood that the embodiments illustrated above shows an application only for the purposes of illustration. In practice, embodiments may be applied to many different configurations, the detailed embodiments being straightforward for those skilled in the art to implement.

For example, although the above illustrative examples are described in the context of a gear shift input device, it will be understood that the inputs may be used for other automotive controls.

## Claims

1. A steering wheel input device comprising:
an input actuator for location adjacent to a steering wheel and comprising a first input region being moveable around an axis of the steering wheel and operable by a driver's first hand on the steering wheel for registering a first input;
a tracking input for receiving tracking data of the interior of the vehicle; and
a controller for moving the first input region based on the tracking data.

2. A steering wheel input device according to claim 1, wherein the tracking data comprises steering wheel rotation data for determining the rotational position on the steering wheel, and wherein the controller is operable to move the first input region in line with the rotation of the steering wheel.

3. A steering wheel input device according to claim 1 or 2, wherein the tracking data comprises hand tracking data for determining the location of the driver's first hand on the steering wheel, and wherein the controller is operable to move the first input region in line with movement of the first hand around the steering wheel.

4. A steering wheel input device according to any preceding claim, wherein the input actuator further comprises a second input region being moveable around the axis of the steering wheel and pressable by a driver's second hand on the steering wheel for receiving a second input.

5. A steering wheel input device according to claim 4, wherein the controller is operable to move the second input region in line with one of:
(a) the rotation of the steering wheel based on steering wheel rotation tracking data, or
(b) movement of the second hand around the steering wheel based on hand tracking data, wherein the hand tracking data is further for determining the location of the second hand on the steering wheel.

6. A steering wheel input device according to any preceding claim, wherein the device is a gear shift device and the first input region is a gear shift input for actuating a gear change.

7. A steering wheel input device according to any preceding claim, wherein the input actuator comprises a ring member for location coaxial to the steering wheel and wherein the first input region is moveable circumferentially around the ring member.

8. A steering wheel input device according to claim 7, further comprising:
a mount for mounting the ring member behind the steering wheel, the mount forming a tiltable coupling with the ring member; and
a tilt detector for detecting a radial direction of tilt of the ring member; and
wherein the controller is configured to register a first input when a detected radial direction of tilt is inline with the first input region.

9. A steering wheel input device according to claim 7 or 8, further comprising:
an indicator provided on the ring member for indicating the current circumferential position of the first input region on the ring member.

10. A steering wheel input device according to any of claims 1 to 7, wherein the input actuator comprises a first paddle defining the first input region at its end, and
wherein the device further comprises a first mount for moveably supporting the first paddle, and a rotor for rotating the first mount to move the first paddle around the steering wheel axis.

11. A steering wheel input device according to claim 10, wherein the first paddle is tiltably coupled to the mount and wherein the device further comprises a tilt detector for detecting a tilt of the first paddle, and
wherein the controller is configured to register a first input when the first paddle is tilted.

12. A steering wheel input device according to claim 10 or 11, wherein the input actuator further comprises a second paddle defining the second input region at its end, and
wherein the device further comprises a second mount for moveably supporting the second paddle, and a second rotor for rotating the second mount for moving the second paddle around the steering wheel axis.

13. A steering wheel input device according to any preceding claim, wherein the tracking input is configured to receive hand tracking data from a video feed of the interior of a vehicle for determining the location of the driver's hands on the steering wheel.

14. A steering wheel input device according to claim 13, wherein the tracking input comprises a camera for receiving images of the interior of the vehicle.

15. A steering wheel input device according to claim 14, wherein camera is mountable within a hub of the steering wheel.
